(19) Europäisches Patentamt
European Patent Office
Office européen des brevets

(11) EP 3 179 268 A1

(12) EUROPEAN PATENT APPLICATION
published in accordance with Art. 153(4) EPC

(43) Date of publication:
14.06.2017 Bulletin 2017/24

(51) Int Cl.:
G01S 7/52 (2006.01)  G01S 15/89 (2006.01)

(21) Application number: 15892800.2

(22) Date of filing: 13.10.2015

(86) International application number:
PCT/CN2015/000692

(87) International publication number:
WO 2017/063104 (20.04.2017 Gazette 2017/16)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA

(71) Applicant: Beijing East Whale Image Technology
Co., Ltd.
Haidian District, Beijing 100176 (CN)

(72) Inventors:
• HE, Xingbai
  Beijing 100176 (CN)
• LI, Yi
  Beijing 100176 (CN)
• WEI, Shiyu
  Beijing 100176 (CN)

(74) Representative: Hanna, Peter William Derek et al
Hanna Moore + Curley
Garryard House
25/26 Earlsfort Terrace
Dublin 2, D02 PX51 (IE)

(54) **BEAM SYNTHESIS METHOD, DEVICE AND ULTRASOUND IMAGING APPARATUS**

(57) The embodiment of this invention provides a beam composition method and device and an ultrasonic imaging device. The method of beam composition comprises: obtaining the point-by-point delay data of the ultrasonic probe channel; compressing the said point-by-point delay data according to the compression method to obtain the compressed data; and sending the said compressed data to the hardware of the ultrasonic imaging system, so that the said hardware can decompress the said compressed data according to the said compression method to obtain the said point-by-point delay data and carry out beam composition according to the said point-by-point delay data. This invention embodiment can enhance the focusing precision of ultrasonic beam composition.

```
┌──────────────────────────────────────────┐ ╱ 101
│ Obtaining the point-by-point delay data   │
│ of the ultrasonic probe channel;          │
└──────────────────────────────────────────┘
                    │
                    ▼
┌──────────────────────────────────────────┐ ╱ 102
│ Compressing the said point-by-point delay │
│ data according to the compression method  │
│ to obtain the compressed data;            │
└──────────────────────────────────────────┘
                    │
                    ▼
┌──────────────────────────────────────────┐ ╱ 103
│ Sending the said compressed data to the   │
│ hardware of the ultrasonic imaging system,│
│ so that the said hardware can decompress  │
│ the said compressed data according to the │
│ said compression method to obtain the said│
│ point-by-point delay data and carry out   │
│ beam composition according to the said    │
│ point-by-point delay data.                │
└──────────────────────────────────────────┘
```

Figure 1

**Description**

**Field of technology**

The embodiment of this invention relates to the field of ultrasonic imaging, especially a beam composition method and device, and an ultrasonic imaging device.

**Background**

Ultrasonic beam composition is one the core processing steps of ultrasonic imaging. Its focusing precision is directly related to the image quality of ultrasonic imaging. The focusing precision depends on the precision of the delay value of point-by-point focusing obtained by hardware. Currently, for the acquisition of the delay time of point-by-point focusing by hardware, software or tables are mainly used to provide the precise delay times of some focus points; these delay times are sent to hardware which estimates the delay time corresponding to each sampling point through simple interpolation. Thus, only some focus points have precise delay times, while the delay times of other focus points are imprecise. Theoretically, the coherence between echoes can't be guaranteed, thus affecting the focusing precision, lowering the effect of beam composition, and certainly influencing the image quality.

**Summary of the invention**

The embodiment of this invention provides a beam composition method and device and an ultrasonic imaging device to enhance the focusing precision of ultrasonic beam composition.

In order to solve the above technical problems, this invention embodiment provides the following technical solutions:

This invention embodiment provides a beam composition method, comprising:

obtaining the point-by-point delay data of the ultrasonic probe channel;
compressing the said point-by-point delay data according to the compression method to obtain the compressed data; and
sending the said compressed data to the hardware of the ultrasonic imaging system, so that the said hardware can decompress the said compressed data according to the said compression method to obtain the said point-by-point delay data and carry out beam composition according to the said point-by-point delay data.

This invention embodiment also provides a beam composition device, comprising:

an acquisition module for obtaining the point-by-point delay data of the ultrasonic probe channel;
a compression module for compressing the said point-by-point delay data according to the compression method to obtain the compressed data; and
a sending module for sending the said compressed data to the hardware of the ultrasonic imaging system, so that the said hardware can decompress the said compressed data according to the said compression method to obtain the said point-by-point delay data and carry out beam composition according to the said point-by-point delay data.

This invention embodiment also provides an ultrasonic imaging device comprising the above-said beam composition device.

This invention embodiment has the following advantageous effects at least:

By sending the compressed point-by-point delay data to hardware and decompressing the same with hardware, the hardware can obtain precise point-by-point delay data. Compared with the fact that the existing hardware can only obtain partial precise point-by-point delay data, the focusing precision of beam composition is higher.

**Brief description of the drawings**

Figure 1 shows the steps of the beam composition method provided by the invention embodiment;
Figure 2 show the framework provided by the better implementation method;
Figure 3 shows the structure of the beam composition device provided by the invention embodiment.

**Detailed description of preferred embodiments**

To further clarify the purpose, technical solutions and advantages of this invention, the following part further describes this invention in detail in combination with figures and the embodiment. It should be understood that the embodiment described herein is used to explain this invention only instead of limiting this invention.

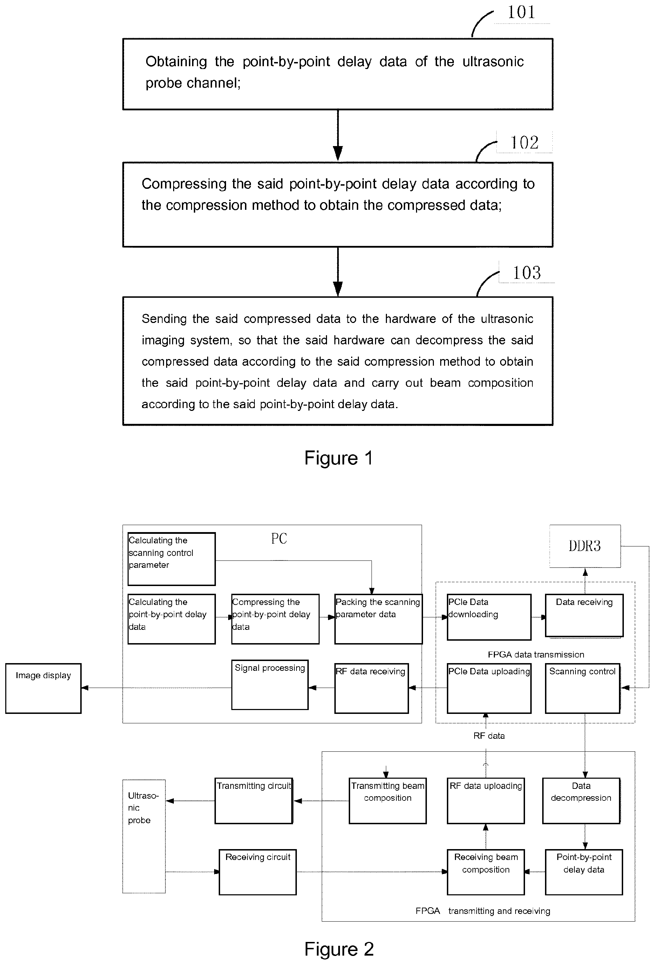

Figure 1 shows the steps of the beam composition method provided by the invention embodiment. See Figure 1. The invention embodiment provides a beam composition method, comprising the following steps:

Step 101: obtaining the point-by-point delay data of the ultrasonic probe channel;

Step 202: compressing the said point-by-point delay data according to the compression method to obtain the compressed data; and

Step 303: sending the said compressed data to the hardware of the ultrasonic imaging system, so that the said hardware can decompress the said compressed data according to the said compression method to obtain the said point-by-point delay data and carry out beam composition according to the said point-by-point delay data.

It can be seen that by the above method in which the compressed point-by-point delay data are sent to and decompressed by hardware, the hardware can obtain precise point-by-point delay data. Compared with the fact that the existing hardware can only obtain partial precise point-by-point delay data, the focusing precision of beam composition is higher

Wherein, the said point-by-point delay data may comprise delay values corresponding to multiple sampling time points in time sequence. Specifically, for two adjacent time points in multiple sampling time points, the difference between the delay value of the latter and the delay value of the former may be 0 or 1. For example, multiple sampling time points can be: t0, t1, t2...t20 in order; their corresponding delay values are: the initial delay value $(T_0)$, $T_0+1$, $T_0+2$, $T_0+3$, $T_0+3$, $T_0+4$, $T_0+4$, $T_0+5$, $T_0+5$, $T_0+5$, $T_0+6$, $T_0+6$, $T_0+6$, $T_0+6$, $T_0+7$, $T_0+7$, $T_0+7$, $T_0+7$, $T_0+7$, $T_0+8$ and $T_0+8$ in order. In periodic sampling, the time interval between adjacent time points is the time interval of sampling.

Compressing the said point-by-point delay data according to the compression method to obtain the compressed data can comprise:

according to the correspondence between the said multiple sampling time points and the said delay value, determining the difference between the corresponding delay value in the said multiple sampling time points and the previous delay value corresponding to its previous sampling time point as the updated sampling time point of the set value which is relative to the time increment of the earliest sampling time point corresponding to the said previous delay value in the multiple sampling time points;

calculating the specific value between each said time increment and the sampling interval;

conducting bit coding for each said specific value according to the coding method to obtain code data;

arranging all the said code data in the time order of the said earliest sampling time point corresponding to the relevant time increment, to obtain the code data sequence;

generating the indicative data indicating the bit position of each said code data in the said code data sequence;

combining the initial delay value corresponding to the earliest sampling time point in the said multiple sampling time points, the said indicative data, and the said code data sequence according to the combination method to obtain the said compressed data;

Compressing the said point-by-point delay data according to the compression method to obtain the compressed data can comprise:

decomposing the said initial delay value, the said indicative data and the said code data sequence from the compressed data according to the said composition method;

analyzing all the said code data from the said code data sequence according to the said indicative data;

conducting bit coding for each said code data to obtain each said specific value according to the said coding method;

calculating the product of each specific value and the sampling time to obtain each time increment; and

determining each of the delay values except the initial delay value in all delay values according to the set value, initial delay value and all time increments.

The beam composition according to the said point-by-point delay data can comprise:

beam composition according to the said initial delay time and each of other delay values.

In the above example, the said correspondence includes: t0, t1, t2...t20 correspond to $T_0$, $T_0+1$, $T_0+2$, $T_0+3$,

$T_0+3$, $T_0+4$, $T_0+4$, $T_0+5$, $T_0+5$, $T_0+5$, $T_0+6$, $T_0+6$, $T_0+6$, $T_0+6$, $T_0+7$, $T_0+7$, $T_0+7$, $T_0+7$, $T_0+7$, $T_0+8$ and $T_0+8$ respectively; the said set value is 1; the said updated sampling time points are t1, t2, t3, t5, t7, t10, t14 and t19; the corresponding delay values are $T_0+1$, $T_0+2$, $T_0+3$, $T_0+4$, $T_0+5$, $T_0+6$, $T_0+7$ and $T_0+8$; the corresponding previous sampling time points are t0, t1, t2, t4, t6, t9, t13 and t18; the corresponding previous delay values are $T_0$, $T_0+1$, $T_0+2$, $T_0+3$, $T_0+4$, $T_0+5$, $T_0+6$ and $T_0+7$; the corresponding earliest sampling time points are t0, t1, t2, t3, t5, t7, t10 and t14; the corresponding time increments are t1-t0, t2-t1, t3-t2, t5-t3, t7-t5, t10-t7, t14-t10 and t19-14; set the sampling interval as deltT, the corresponding specific values are 1, 1, 1, 2, 2, 3, 4 and 5. Accordingly, after bit coding for these specific values, three specific values with a bit width of 1 are obtained: 1, 1 and 1; four specific values with a bit width of 2 are obtained: 2, 2, 3 and 4; and one specific value with a bit width of 5: 5. It shows the data size sent in this way is much smaller.

Wherein, the said compressed data can comprise data packets; the said indicative data can comprise bit width bit data and segment bit data; the said generation of indicative data indicating the bit position of each code data in the code data sequence can comprise:

dividing the code data sequence into multiple segments, wherein each segment includes at least one code data required with the same bit width;
generating the bit width bit data used to indicate the bit width of each segment; and
generating segment bit data used to indicate the bit position of each segment in the code data sequence.

Combining the initial delay value corresponding to the earliest sampling time point in the said multiple sampling time points, the said indicative data, and the said code data sequence according to the combination method to obtain the said compressed data can comprise:

adding the initial delay value, all bit width bit data and all segment bit data to the first field, the second filed and the third field respectively of the header of the said data packet to obtain the addition header;
adding the code data sequence to the payload of the said data packet to obtain the addition payload; and
combining the said addition header and the said payload into the said data packet.

Analyzing the initial delay value, the said indicative data, and the said code data sequence according to the combination method can comprise:

analyzing the said initial delay value, all bit width bit data and all segment bit data from the first field, the second field and the third field; and
analyzing the said code data sequence from the said payload of the said data packet.

Analyzing all code data from the said code data sequence according to the said indicative data can comprise:

determining the bit width of each segment according to the said bit width bit data;
determining the bit position of each segment in the said code data sequence according to the said segment bit data;
determining the bit position of each code data in at least one code data included in each segment in the code data sequence according to the bit width of each segment and its bit position in the code data sequence; and
reading each code data in the code data sequence in order according to the determined bit position.

Determining each of the delay values except the initial delay value in all delay values according to the set value, initial delay value and all time increments can comprise:

taking the initial delay value as the delay value corresponding to each of all sampling time points from the earliest sampling time point corresponding to the earliest time increment to the previous sampling time point; the earliest time increment is the earliest time increment of the corresponding earliest sampling time point in all time increments; for the subsequent time increments except the latest time increment, taking the delay value corresponding to the updated sampling time point corresponding to each time increment as the delay value corresponding to each of all sampling time points from the earliest sampling time point corresponding to the earliest time increment to the previous sampling time point; the latest time increment is the latest time increment of the corresponding earliest sampling time point in all time increments; and
taking the delay value corresponding to the updated sampling time point corresponding to the latest time increment as the delay value of each of the remaining sampling time points in multiple sampling time points.

Here, the bit position can be expressed as the initial bit position and the end bit position. With the bit position and bit width of each segment, the initial and end bit positions of each code data can be obtained.

Wherein, the header can have a set size.

To further clarify the invention embodiment, a better implementation method of the invention embodiment is provided as follows.

This better implementation method considers the fact that, to form an ultrasonic image scanning line, the delay time required by each probe crystal corresponding to each sampling point increases monotonously as the depth increases and the first derivative decreases monotonously and approaches zero, depending on the geometrical relationship between the probe position and the scanning line.

Patent CN103454640 A discloses an ultrasonic imaging system structure based on radio frequency (RF) data uploading. This better implementation method is based on the implementation plan of the structure. See Figure 2. Software undertakes most data calculation, including calculation of point-by-point focusing delay. Hardware has control function only and is characterized by "Software Defined Ultrasound". The specific implementation method is as follows:

1. an ultrasound system based on FR data uploading, including a general-purpose PC, FPGA for data transmission, FPGA for transmitting and receiving, transmitting circuit and receiving circuit;

2. running the software in the general-purpose PC to calculate, scan and control relevant parameters;

3. meanwhile, the software calculates the point-by-point delay data of each channel according to the geometrical relationship between the probe array element and the focus; sampling frequency is f; the sampling time interval is $1/f$; the precision of delay data is $0.5/f$;

4. meanwhile, the software compresses the point-by-point delay data according to the characteristics that the point-by-point delay data increases monotonously; the compression method is as follows:

a) the fragmentation method is adopted for the point-by-point data of each channel;

b) the header of delay data is fixed to 20bit and used to describe the fragmentation method;

c) the definition of delay data is the sampling time point of the delay value increment plus 1; and

d) the specific storage format adopted is as follows:

$$b_{s_{N_b^s}+N_a^{N_s}N_b^{N_s}-1}$$

$$\vdots$$

$$b_{s_{N_b^s}+1}$$

$$b_{s_{N_b^s}}$$

$$\vdots$$

$$b_{N_a^1 N_b^1 -1}$$

$$\vdots$$

$$b_1$$

$$b_0$$

$$t_s^{N_s}$$

$$N_b^{N_s}$$

$$\vdots$$

$$t_s^1$$

$$N_b^1$$

$$t_s^0$$

$$N_s$$

a) $N_s$: the number of fragments of delay data; the bit width is 4 bits; it refers to the number of fragments of a set of data;

b) $t_s^0$ : the start time of beam composition; the bit width is 16 bit; it refers to the initial delay time;

c) $t_s^k$ : the onset time of fragment k; $t_s^0 < t_s^1 < t_s^2 < \cdots < t_s^{N_s}$ ; the bit width is 16 bits; k=1,2,$\cdots$,$N_s$; it refers to the time when the data of fragment k take effect; when the process of beam composition reaches this time point, the data of fragment k is used;

d) $N_b^k$ : the bit width of each data of fragment k; $N_b^1 < N_b^2 < \cdots < N_b^{N_s}$ ; 4 bits; k=1,2,$\cdots$,$N_s$; and

e) $N_u^k$ : The frequency of delay updating within the time of fragment k; the initial bit position of the data of each fragment is $s_k = s_{k-1} + N_u^{k-1} N_b^{k-1}$ and the end position is $s_k + N_u^k N_b^k - 1$ ; it describes the number of delay data updating (plus 1 operation) in each fragment; "number of fragments" + "bit width" = the total length of data of each fragment. With the total length of data of each fragment, the start and end positions of each fragment of data can be obtained and precise reading can be realized.

Wherein, the initial delay time is a general parameter in ultrasound; to be specific, it's the time when ultrasound reflects the depth zero, i.e. the time when it starts to receive echoes.

Next is the time increment data. Time increment data are added to the initial delay time to obtain the sampling time point of delay value plus 1 at a time of beam composition, thus restoring the point-by-point focusing delay of beam composition.

5. then, the software packs the scanning control parameter and point-by-point delay parameter according to certain rules and sends the scanning control parameter and compressed point-by-point delay data to FPGA via transmission channels, such as PCIe and USB;

6. the FPGA for data transmission receives the scanning parameter and stores it into the external memory DDR3;

7. When the ultrasonic scanning starts, the scanning control module in the FPGA for data transmission reads the scanning control parameter (including compressed point-by-point focusing parameters) in DDR3 and sends it to the FPGA for transmitting and receiving according to certain time sequence; and

8. the FPGA for transmitting and receiving receives the scanning control parameter and decompresses point-by-point delay according to the above compression method to receive beam composition and realize point-by-point focusing.

The specific compression method is to analyze data and restore point-by-point delay according to the above compression method:

reading the header to obtain the number of data fragments and the initial delay;

reading the header to obtain the bit width and onset time of each fragment of data, calculate the total length of each data fragment and obtain the start and end positions of each data fragment;

reading the delay increment according to the start and end positions and the bit width of each data fragment and adding it to the initial delay to obtain the sampling time point of delay increment plus 1 of beam composition and restore the point-by-point delay.

uploading the RF data after point-by-point focusing beam composition to the FPGA for data transmission; the FPGA for data transmission conducts no processing and sends the RF data to PC directly; and

PC conducts signal processing based on RF data and displays images.

For the compression effect obtained through this better implementation method, the delay data size of each channel is different and the largest data size is in the channel which is the farthest from the scanning line. When there are 4,096 sampling points, the data size of the 128th channel is only about 1 kbit. The compression effect is very impressive.

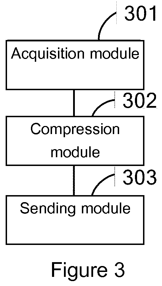

Figure 3 shows the structure of the beam composition device provided by the invention embodiment; based on Figure 3, this invention embodiment also provides a beam composition device, comprising:

an acquisition module 401 for obtaining point-by-point delay data of the ultrasonic probe channel;

a compression module 402 for compressing the said point-by-point delay data according to the compression method to obtain compressed data; and

a sending module 403 for sending the said compressed data to the hardware of the ultrasonic imaging system so that the hardware can decompress the said compressed data to according to the said compression method to obtain the said point-by-point delay data and carry put beam composition according to the said point-by-point delay data.

It can be seen that with the above method in which the compressed point-by-point delay data is sent to the hardware which decompresses the compressed point-by-point delay data, the hardware can obtain precise point-by-point delay data. Compared with the fact that the existing hardware can only obtain partial precise point-by-point delay data, the focusing precision of beam composition is higher.

Wherein, the said point-by-point delay data can include the initial delay values corresponding to multiple sampling time points in time sequence.

The said compression module 402 can comprise:

the first determination unit for determining the difference between the corresponding delay value in the said multiple sampling time points and the previous delay value corresponding to its previous sampling time point as the updated sampling time point of the set value which is relative to the time increment of the earliest sampling time point corresponding to the said previous delay value in the multiple sampling time points;

the first calculation unit for calculating the specific value of each said time increment and the sampling time interval;

a coding unit for carrying out bit coding for each said specific value according to the coding method to obtain the code date;

an arrangement unit for arranging all the said code data in the time order of the said earliest sampling time point corresponding to the relevant time increment, to obtain the code data sequence;

a generation unit for generating the indicative data indicating the bit position of each said code data in the said code data sequence; and

a combination unit for combining the initial delay value corresponding to the earliest sampling time point in the said multiple sampling time points, the said indicative data, and the said code data sequence according to the combination method to obtain the said compressed data.

Decompressing the compressed data according to the compression method to obtain the said point-by-point delay data can comprise:

a decomposition unit for decomposing the said initial delay value, the said indicative data and the said code data sequence from the compressed data according to the said composition method;

an analysis unit for analyzing all the said code data from the said code data sequence according to the said indicative data;

a decoding unit for conducting bit coding for each said code data to obtain each said specific value according to the said coding method;

the second calculate unit for calculating the product of each specific value and the sampling time to obtain each time increment; and

the second determination unit for determining each of the delay values except the initial delay value in all delay values according to the set value, initial delay value and all time increments.

The beam composition according to the said point-by-point delay data can comprise:

a composition unit for carrying out beam composition according to the said initial delay time and each of other delay values.

Wherein, the said compressed data can comprise data packets; the said indicative data can comprise bit width bit data and segment bit data; the said generation unit can comprise:

a division subunit for dividing the code data sequence into multiple segments, wherein each segment includes at least one code data required with the same bit width;

the first generation subunit for generating the bit width bit data used to indicate the bit width of each segment; and

the second generation subunit for generating the fragment bit data used to indicate the bit position of each fragment in the code data sequence.

The said combination unit can comprise:

the first addition subunit for adding the initial delay value, all bit width bit data and all segment bit data to the first field, the second filed and the third field respectively of the header of the said data packet to obtain the addition header;

the second addition subunit for adding the code data sequence to the payload of the said data packet to obtain the addition payload; and

a combination subunit for combining the said addition header and the said payload into the said data packet.

The said decomposition unit can comprise:

the first analysis subunit for analyzing the said initial delay value, all bit width bit data and all segment bit data from the first field, the second field and the third field; and
the second analysis subunit for analyzing the said code data sequence from the said payload of the said data packet.

The said analysis unit can comprise:

the first determination subunit for determining the bit width of each segment according to the said bit width bit data;
the second determination subunit for determining the bit position of each segment in the said code data sequence according to the said segment bit data;
the third determination subunit for determining the bit position of each code data in at least one code data included in each segment in the code data sequence according to the bit width of each segment and its bit position in the code data sequence; and
a reading subunit for reading each code data in the code data sequence in order according to the determined bit position.

The said second determination unit can comprise:

the first assignment subunit for taking the initial delay value as the delay value corresponding to each of all sampling time points from the earliest sampling time point corresponding to the earliest time increment to the previous sampling time point; the earliest time increment is the earliest time increment of the corresponding earliest sampling time point in all time increments;
the second assignment subunit, for the subsequent time increments except the latest time increment, for taking the delay value corresponding to the updated sampling time point corresponding to each time increment as the delay value corresponding to each of all sampling time points from the earliest sampling time point corresponding to the earliest time increment to the previous sampling time point; the latest time increment is the latest time increment of the corresponding earliest sampling time point in all time increments; and
the third assignment subunit for taking the delay value corresponding to the updated sampling time point corresponding to the latest time increment as the delay value of each of the remaining sampling time points in multiple sampling time points.

Wherein, the header can have a set size.
This invention embodiment also provides an ultrasonic imaging device which comprises the above beam composition device.
See the above embodiment for the detailed description of all aspects of the device embodiment. It is unnecessary to go into details here.
The above embodiment is only used to describe the better implementation method of this invention instead of limiting the scope of this invention. On the premise of adhering to the design spirit of this invention, any modification and improvement made to the technical solutions of this invention by common technicians in the field shall be within the scope of protection specified in the Claims of this invention.

**Claims**

1. A beam composition method, **characterized in** comprising:

   obtaining the point-by-point delay data of the ultrasonic probe channel;
   compressing the said point-by-point delay data according to the compression method to obtain the compressed data; and
   sending the said compressed data to the hardware of the ultrasonic imaging system, so that the said hardware can decompress the said compressed data according to the said compression method to obtain the said point-by-point delay data and carry out beam composition according to the said point-by-point delay data.

2. The method according to Claim 1, **characterized in that** the said point-by-point delay data may comprise delay values corresponding to multiple sampling time points in time sequence.

3. The method according to Claim 2, **characterized in that** compressing the said point-by-point delay data according to the compression method to obtain the compressed data can comprise:

according to the correspondence between the said multiple sampling time points and the said delay value, determining the difference between the corresponding delay value in the said multiple sampling time points and the previous delay value corresponding to its previous sampling time point as the updated sampling time point of the set value which is relative to the time increment of the earliest sampling time point corresponding to the said previous delay value in the multiple sampling time points;

calculating the specific value between each said time increment and the sampling interval;

conducting bit coding for each said specific value according to the coding method to obtain code data;

arranging all the said code data in the time order of the said earliest sampling time point corresponding to the relevant time increment, to obtain the code data sequence;

generating the indicative data indicating the bit position of each said code data in the said code data sequence;

combining the initial delay value corresponding to the earliest sampling time point in the said multiple sampling time points, the said indicative data, and the said code data sequence according to the combination method to obtain the said compressed data;

Decompressing the said compressed data according to the compression method to obtain the point-by-point delay data can comprise:

decomposing the said initial delay value, the said indicative data and the said code data sequence from the compressed data according to the said composition method;

analyzing all the said code data from the said code data sequence according to the said indicative data;

conducting bit decoding for each said code data to obtain each said specific value according to the said coding method;

calculating the product of each specific value and the sampling time to obtain each time increment; and

determining each of the delay values except the initial delay value in all delay values according to the set value, initial delay value and all time increments.

The beam composition according to the said point-by-point delay data can comprise:

conducting beam composition according to the said initial delay time and each of other delay values.

4. The method according to Claim 3, **characterized in that** the said compressed data can comprise data packets; the said indicative data can comprise bit width bit data and segment bit data; the said generation of indicative data indicating the bit position of each code data in the code data sequence can comprise:

dividing the code data sequence into multiple segments, wherein each segment includes at least one code data required with the same bit width;

generating the bit width bit data used to indicate the bit width of each segment; and

generating segment bit data used to indicate the bit position of each segment in the code data sequence.

Combining the initial delay value corresponding to the earliest sampling time point in the said multiple sampling time points, the said indicative data, and the said code data sequence according to the combination method to obtain the said compressed data can comprise:

adding the initial delay value, all bit width bit data and all segment bit data to the first field, the second filed and the third field respectively of the header of the said data packet to obtain the addition header;

adding the code data sequence to the payload of the said data packet to obtain the addition payload; and

combining the said addition header and the said payload into the said data packet.

Analyzing the initial delay value, the said indicative data, and the said code data sequence according to the combination method can comprise:

analyzing the said initial delay value, all bit width bit data and all segment bit data from the first field, the second field and the third field; and

analyzing the said code data sequence from the said payload of the said data packet.

Analyzing all code data from the said code data sequence according to the said indicative data can comprise:

determining the bit width of each segment according to the said bit width bit data;
determining the bit position of each segment in the said code data sequence according to the said segment bit data;
determining the bit position of each code data in at least one code data included in each segment in the code data sequence according to the bit width of each segment and its bit position in the code data sequence; and
reading each code data in the code data sequence in order according to the determined bit position.

Determining each of the delay values except the initial delay value in all delay values according to the set value, initial delay value and all time increments can comprise:

taking the initial delay value as the delay value corresponding to each of all sampling time points from the earliest sampling time point corresponding to the earliest time increment to the previous sampling time point; the earliest time increment is the earliest time increment of the corresponding earliest sampling time point in all time increments;

for the subsequent time increments except the latest time increment, taking the delay value corresponding to the updated sampling time point corresponding to each time increment as the delay value corresponding to each of all sampling time points from the earliest sampling time point corresponding to the earliest time increment to the previous sampling time point; the latest time increment is the latest time increment of the corresponding earliest sampling time point in all time increments; and

taking the delay value corresponding to the updated sampling time point corresponding to the latest time increment as the delay value of each of the remaining sampling time points in multiple sampling time points.

5. The method according to Claim 4, **characterized in that** the header can have a set size.

6. A beam composition device, **characterized in** comprising:

an acquisition module for obtaining point-by-point delay data of the ultrasonic probe channel;
a compression module for compressing the said point-by-point delay data according to the compression method to obtain compressed data; and
a sending module for sending the said compressed data to the hardware of the ultrasonic imaging system so that the hardware can decompress the said compressed data to according to the said compression method to obtain the said point-by-point delay data and carry put beam composition according to the said point-by-point delay data.

7. The device according to Claim 6, **characterized in that** the said point-by-point delay data can include the initial delay values corresponding to multiple sampling time points in time sequence.

8. The device according to Claim 7, **characterized in that** the said compression module comprises:

the first determination unit for determining the difference between the corresponding delay value in the said multiple sampling time points and the previous delay value corresponding to its previous sampling time point as the updated sampling time point of the set value which is relative to the time increment of the earliest sampling time point corresponding to the said previous delay value in the multiple sampling time points;
the first calculation unit for calculating the specific value of each said time increment and the sampling time interval;
a coding unit for carrying out bit coding for each said specific value according to the coding method to obtain the code date;
an arrangement unit for arranging all the said code data in the time order of the said earliest sampling time point corresponding to the relevant time increment, to obtain the code data sequence;
a generation unit for generating the indicative data indicating the bit position of each said code data in the said code data sequence; and
a combination unit for combining the initial delay value corresponding to the earliest sampling time point in the said multiple sampling time points, the said indicative data, and the said code data sequence according to the combination method to obtain the said compressed data.

Decompressing the compressed data according to the compression method to obtain the said point-by-point delay data can comprise:

a decomposition unit for decomposing the said initial delay value, the said indicative data and the said code data sequence from the compressed data according to the said composition method;

an analysis unit for analyzing all the said code data from the said code data sequence according to the said indicative data;

a decoding unit for conducting bit coding for each said code data to obtain each said specific value according to the said coding method;

the second calculate unit for calculating the product of each specific value and the sampling time to obtain each time increment; and

the second determination unit for determining each of the delay values except the initial delay value in all delay values according to the set value, initial delay value and all time increments.

The beam composition according to the said point-by-point delay data can comprise:

a composition unit for carrying out beam composition according to the said initial delay time and each of other delay values.

**9.** The device according to Claim 8, **characterized in that** the said compressed data can comprise data packets; the said indicative data can comprise bit width bit data and segment bit data; the said generation unit comprises:

a division subunit for dividing the code data sequence into multiple segments, wherein each segment includes at least one code data required with the same bit width;

the first generation subunit for generating the bit width bit data used to indicate the bit width of each segment; and

the second generation subunit for generating the fragment bit data used to indicate the bit position of each fragment in the code data sequence.

The said combination unit can comprise:

the first addition subunit for adding the initial delay value, all bit width bit data and all segment bit data to the first field, the second filed and the third field respectively of the header of the said data packet to obtain the addition header;

the second addition subunit for adding the code data sequence to the payload of the said data packet to obtain the addition payload; and

a combination subunit for combining the said addition header and the said payload into the said data packet.

The said decomposition unit can comprise:

the first analysis subunit for analyzing the said initial delay value, all bit width bit data and all segment bit data from the first field, the second field and the third field; and

the second analysis subunit for analyzing the said code data sequence from the said payload of the said data packet.

The said analysis unit comprises:

the first determination subunit for determining the bit width of each segment according to the said bit width bit data;

the second determination subunit for determining the bit position of each segment in the said code data sequence according to the said segment bit data;

the third determination subunit for determining the bit position of each code data in at least one code data included in each segment in the code data sequence according to the bit width of each segment and its bit position in the code data sequence; and

a reading subunit for reading each code data in the code data sequence in order according to the determined bit position.

The said second determination unit comprises:

the first assignment subunit for taking the initial delay value as the delay value corresponding to each of all sampling time points from the earliest sampling time point corresponding to the earliest time increment to the previous sampling time point; the earliest time increment is the earliest time increment of the corresponding earliest sampling time point in all time increments;

the second assignment subunit, for the subsequent time increments except the latest time increment, for taking the delay value corresponding to the updated sampling time point corresponding to each time increment as the delay value corresponding to each of all sampling time points from the earliest sampling time point corresponding to the earliest time increment to the previous sampling time point; the latest time increment is the latest time increment of the corresponding earliest sampling time point in all time increments; and

the third assignment subunit for taking the delay value corresponding to the updated sampling time point corresponding to the latest time increment as the delay value of each of the remaining sampling time points in multiple sampling time points.

10. The device according to Claim 9, **characterized in that** the header has a set size

11. An ultrasonic imaging device **characterized in** comprising the beam composition device set forth in any one of Claims 6 to 10.

101

Obtaining the point-by-point delay data of the ultrasonic probe channel;

102

Compressing the said point-by-point delay data according to the compression method to obtain the compressed data;

103

Sending the said compressed data to the hardware of the ultrasonic imaging system, so that the said hardware can decompress the said compressed data according to the said compression method to obtain the said point-by-point delay data and carry out beam composition according to the said point-by-point delay data.

Figure 1

PC

DDR3

Calculating the scanning control parameter

Calculating the point-by-point delay data → Compressing the point-by-point delay data → Packing the scanning parameter data

PCIe Data downloading → Data receiving

FPGA data transmission

Image display

Signal processing ← RF data receiving ← PCIe Data uploading ← Scanning control

RF data

Ultraso-nic probe

Transmitting circuit ← Transmitting beam composition ← RF data uploading ← Data decompression

Receiving circuit → Receiving beam composition ← Point-by-point delay data

FPGA transmitting and receiving

Figure 2

301

| Acquisition module |
| --- |

302

| Compression module |
| --- |

303

| Sending module |
| --- |

Figure 3

# INTERNATIONAL SEARCH REPORT

| International application No. |
| --- |
| **PCT/CN2015/000692** |

### A. CLASSIFICATION OF SUBJECT MATTER

G01S 7/52 (2006.01) i; G01S 15/89 (2006.01) i

According to International Patent Classification (IPC) or to both national classification and IPC

### B. FIELDS SEARCHED

Minimum documentation searched (classification system followed by classification symbols)

G01S; A61B 8

Documentation searched other than minimum documentation to the extent that such documents are included in the fields searched

Electronic data base consulted during the international search (name of data base and, where practicable, search terms used)

CNABS, CNTXT, EPODOC, WPI, CNKI: ultrasound, beam, composition, point-by-point, storage, focus, delay, compress, ratio, byte, bit

### C. DOCUMENTS CONSIDERED TO BE RELEVANT

| Category* | Citation of document, with indication, where appropriate, of the relevant passages | Relevant to claim No. |
| --- | --- | --- |
| E | CN 105182316 A (WHALE IMAGING INC.), 23 December 2015 (23.12.2015), claims 1-11 | 1-11 |
| X | WANG, Ping et al., "A high precision algorithm for dynamic focusing based on relative acoustic path difference in ultrasound imaging", ACTA ACUSTICA, vol. 37, no. 5, 31 September 2012 (31.09.2012) , ISSN: 0371-0025, pages 509-514 | 1, 2, 6, 7, 11 |
| X | WANG, Ping et al., "The compression algorithm for focusing delaydata in digital multi-beam forming", JOURNAL OF CHONGQING UNIVERSITY, vol. 35, no. 9, 31 September 2012 (31.09.2012) , ISSN: 1000-582X, pages 100-104 | 1, 2, 6, 7, 11 |
| X | CN 101806890 A (HEFEI WAYEE BIO-ELECTRONICS CO., LTD.), 18 August 2010 (18.08.2010), description, paragraphs [0039]-[0064], and figure 1 | 1, 2, 6, 7, 11 |
| X | CN 101077305 A (HARBIN INSTITUTE OF TECHNOLOGY), 28 November 2007 (28.11.2007), description, pages 4-6, and figures 1-7 | 1, 2, 6, 7, 11 |

☒ Further documents are listed in the continuation of Box C.    ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 22 June 2016 (22.06.2016) | **05 July 2016 (05.07.2016)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **ZHANG, Liping** Telephone No.: (86-10) **62085609** |
| --- | --- |

Form PCT/ISA/210 (second sheet) (July 2009)

# INTERNATIONAL SEARCH REPORT

| | International application No. |
|---|---|
| | **PCT/CN2015/000692** |

**C (Continuation).     DOCUMENTS CONSIDERED TO BE RELEVANT**

| Category* | Citation of document, with indication, where appropriate, of the relevant passages | Relevant to claim No. |
|---|---|---|
| X | US 2007016049 A1 (MEDISON CO., LTD.), 18 January 2007 (18.01.2007), description, paragraph [0022], and claim 4 | 1, 2, 6, 7, 11 |
| A | CN 102247168 A (CHONGQING BORN FUKE MEDICAL EQUIPMENT CO., LTD.), 23 November 2011 (23.11.2011), the whole document | 1-11 |
| A | US 6350240 B1 (MEDISON CO., LTD.), 26 February 2002 (26.02.2002), the whole document | 1-11 |

Form PCT/ISA/210 (continuation of second sheet) (July 2009)

## INTERNATIONAL SEARCH REPORT
### Information on patent family members

International application No.

**PCT/CN2015/000692**

| Patent Documents referred in the Report | Publication Date | Patent Family | Publication Date |
|---|---|---|---|
| CN 105182316 A | 23 December 2015 | None | |
| CN 101806890 A | 18 August 2010 | CN 101806890 B | 20 June 2012 |
| CN 101077305 A | 28 November 2007 | CN 101077305 B | 21 April 2010 |
| US 2007016049 A1 | 18 January 2007 | KR 100847797 B1 | 23 July 2008 |
| | | EP 1744175 A2 | 17 January 2007 |
| | | KR 20070009279 A | 18 January 2007 |
| | | JP 2007021214 A | 01 February 2007 |
| CN 102247168 A | 23 November 2011 | CN 102247168 B | 23 January 2013 |
| US 6350240 B1 | 26 February 2002 | FR 2804516 A1 | 03 August 2001 |
| | | DE 10053682 A1 | 09 August 2001 |
| | | IT RM20010028 D0 | 22 January 2001 |
| | | DE 10053682 B4 | 08 October 2009 |
| | | JP 3423935 B2 | 07 July 2003 |
| | | FR 2804516 B1 | 14 March 2003 |
| | | IT RM20010028 A1 | 22 July 2002 |
| | | JP 2001299750 A | 30 October 2001 |
| | | KR 20010077197 A | 17 August 2001 |
| | | IT 323125 B | 23 July 2004 |

Form PCT/ISA/210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 103454640 A